(19) Europäisches Patentamt
European Patent Office
Office européen des brevets

(11) **EP 2 393 319 A1**

(12) **EUROPEAN PATENT APPLICATION**

(43) Date of publication:
**07.12.2011 Bulletin 2011/49**

(51) Int Cl.:
***H04W 24/08*** (2009.01)

(21) Application number: **11275077.3**

(22) Date of filing: **05.05.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **05.05.2010 GB 1007507**<br><br>(71) Applicant: **Vodafone IP Licensing Limited**<br>**The Connection**<br>**Newbury**<br>**Berkshire RG14 2FN (GB)** | (72) Inventor: **Markoulidakis, Yannis**<br>**171 22, Nea Smyrni (GR)**<br><br>(74) Representative: **Keston, David Arthur**<br>**Vodafone Group Services Ltd.**<br>**Group Legal (Patents)**<br>**Vodafone House**<br>**The Connection**<br>**Newbury**<br>**Berkshire RG14 2FN (GB)** |

(54) **Method for mobile network coverage experience analysis and monitoring**

(57)    In a telecommunications network including a plurality of mobile terminals, a system and method of providing an indication of network coverage in relation to at least one of the plurality of mobile terminals, the method and system being configured to: determine the occurrence of incoming call events in relation to the at least one terminal; record the occurrences together with an identity of at least one applicable terminal, a location and/or a time associated with the communication event; and analyse the recorded incoming call event data, particularly unreachable terminal events, to determine an indication of experienced network coverage for each of the at least one terminal. In this way, an indication of actual user experience can be determined, which is usable in indicatively treating customer complaints, making network improvements and analysing mobile terminal performance.

FIGURE 3

EP 2 393 319 A1

**Description**

Field of the Invention

The present invention relates to a cellular telecommunications network and the management thereof. More particularly, the present invention relates to a system and method for monitoring voice call events, particularly unsuccessful call attempts to/from a mobile terminal, and even more particularly unsuccessful call attempts due to the terminal not being reachable, such as would occur in out of coverage situations. Even more particularly, the present invention relates to a system and method for providing network data analysis in relation to out of coverage situations.

Background

Unsuccessful call attempts encompass both missed calls terminating to a mobile and the inability of a mobile terminal to initiate calls. In mobile/cellular network performance analysis, the rate of missed calls for a user is a Key Performance Indicator (KPI), and there are a number of situations where a missed call may occur, including where:

(a) the called user's mobile terminal was switched off: i.e. turned off by the user or by the terminal itself in the event of a depleted battery, both of which result in the terminal sending a network detach message before shutting down; this case also includes the de-activation of mobile network access without shutting down the terminal (e.g., flight-mode).
(b) the called user was busy: i.e. on another call or not answering the ringing terminal; and
(c) the called user was not reachable/non-contactable by paging procedure indicating out of coverage or other conditions with the same effect: i.e. terminal attached to the network, but non-responsive to the paging message sent by the network on the occurrence of the incoming call.

From a customer viewpoint, the first two missed call situations, (a) and (b) listed above, are generally acceptable, since they are within the user's control. The third point (c), however, is out of the user's control, and therefore likely to cause dissatisfaction and be viewed as a service inadequacy. Similarly the inability to initiate a call is likely to be due to the terminal entering a non-reachable state, and again be viewed as a service inadequacy.
The problem of the terminal entering a non-reachable state may be due to a number of issues, such as:

i) network coverage extent or continuity problems (i.e. the user of the mobile terminal may have moved and entered a region with no signal coverage or with only a weak signal coverage);
ii) mobile terminal associated problems (e.g. terminal antenna sensitivity, performance of the terminal receiver, etc.);
iii) network protocols and standards associated problems (e.g. 3GPP idle mode terminal operation standards);
iv) rarely occurring conditions e.g. local interference in paging channels; or
v) any combination of the above.

Currently the network coverage of a mobile network is described by KPIs such as Population Coverage and Geographic Coverage. Population coverage is calculated using propagation prediction tools and field measurements for an assumed distribution of customers according to their place of residence. In mature networks (e.g. Western Europe), population coverage is generally above 99%. Geographic coverage is also based on propagation prediction tools and field measurements, but provides the extent of network coverage over the physical geography of a country (e.g. taking into account factors like flat terrain, mountains, islands, sea, etc.) Both population and geographical coverage estimates are based on signal strength thresholds corresponding to acceptable outdoor or indoor signal levels. For 3G networks, the 3G network coverage threshold can also consider service related parameters like Video-Telephony, HSDPA 1 Mbps throughput, etc.
Typically in order to derive geographical coverage, the country map is divided into squared units called "pixels" and based on a propagation prediction model provides the coverage in each pixel. To achieve this, the coverage prediction tool estimates the signal strength occurring per pixel for each base station of the radio network. As for any pixel there may be multiple base stations which provide some level of coverage, the propagation prediction tool assigns to this picture the maximum received signal strength from a single base station. It should be noted that the pixel size can be variable as e.g. in urban areas a higher accuracy is required and thus a smaller pixel size can be used versus the one used in rural areas. A specific signal strength threshold is defined (e.g., corresponding to "outdoor" or "indoor" coverage acceptable signal levels) so as to filter the results and provide the percentage of geographical area which is covered as follows:

$$P_{geo\_cov}(A,\theta) = \frac{1}{S(A)} \cdot \sum_{j=1}^{M_A} P_{RSS}(j,\theta) \cdot S(j) \qquad (1)$$

Where:

$P_{geo\_cov}(A,\theta)$ The percentage (%) providing the predicted geographical coverage in area A based on Received Signal Strength (RSS) threshold $\theta$ (in dbm) corresponding to certain coverage conditions (e.g. indoor);
A: The area A can be the whole country or any region of the country;
$M_A$: The number of pixels into which the area A has been divided into by the propagation prediction tool;
S(A): the surface area of area A (in square km);
S(j): the surface of the pixel j (in square km). This approach allows for variable pixel size. If a fixed pixel size is used for the entire area then $s(j)/S_A = 1/M_A$ in Eq. (1); and
$P_{Rss}(j,\theta)$ is a coverage characterization function defined as follows:

$$P_{RSS}(j,\theta) = \begin{cases} 1 & if & RSS(j) \geq \theta \\ 0 & if & RSS(j) < \theta \end{cases} \qquad (2)$$

Where RSS(j) is the predicted RSS level (in dbm) in pixel j.

Population coverage uses the same methodology of geographical coverage prediction, however, it additionally takes into account the geographical distribution of the population's residence as reported in the national demographic statistical databases.
The population coverage can then be expressed as follows:

$$P_{pop\_cov}(A,\theta) = \frac{1}{N_{pop}(A)} \cdot \sum_{j=1}^{M_A} P_{RSS}(j,\theta) \cdot N_{pop}(j) \qquad (3)$$

Where:

$P_{pop\_cov}(A,\theta)$: The percentage (%) providing the predicted population coverage in area A based on RSS threshold $\theta$ (in dbm) corresponding to certain coverage conditions (e.g. indoor) and the population's residence distribution in area A;
$N_{pop}(A)$: The population with reported residence in area A;
$N_{pop}(j)$: The population with reported residence in pixel j. It should be noted that as the pixel size is relatively small (e.g. 50m x 50m) the population with residence in this specific pixel may not be available at this accuracy. Therefore this is usually calculated based on the population data referring to a wider area An around this pixel (e.g. a city, a municipality, etc.) as follows:

$$N_{pop}(j) \approx \frac{S(j)}{S(A_n)} \cdot N_{pop}(A_n) \qquad (4)$$

Where j is a pixel in area An, S(j) the surface of the pixel, $S(A_n)$ the surface of the area An and $N_{pop}(A_n)$ the population of area An. Assuming that the area A is divided into sub-areas An (n=1,2, ..., $N_A$) the population coverage can be expressed as follows in relation to the geographical coverage of area An:

$$P_{pop\_cov}(A,\theta) = \frac{1}{N_{pop}(A)} \cdot \sum_{n=1}^{N_A} N_{pop}(A_n) \cdot \frac{1}{S(A_n)} \cdot \sum_{j=1}^{M_{A_n}} P_{RSS}(j,\theta) \cdot S(j) \Rightarrow \tag{5}$$

$$P_{pop\_cov}(A,\theta) = \sum_{n=1}^{N_A} P_{pop}(A_n) \cdot P_{geo\_cov}(A_n)$$

Where $P_{pop}(A_n)=N_{pop}(A_n)/N_{pop}(A)$ the portion of the population in area A with residence in area An.

Such KPIs as geographical and population coverage are exploited for understanding the extent of coverage provided by a network, in addition to being key drivers for prioritising investments in network coverage expansion both in terms of volume as well as in terms of focusing investment to certain geographical areas.

As it can be observed both KPIs are static indications of network coverage. Moreover, their accuracy is also subject to the geographical data available (e.g. terrain details, pixel size) as well as the accuracy of the propagation prediction model used (e.g., Hata like empirical models, Cost-231 model, ray tracing, etc.)

Although these KPIs are a very useful reference for understanding the extent of offered network coverage, they do not provide an accurate picture of the actual coverage the customer experiences based on their actual geographic position. In other words the actual user experience on coverage in a particular position is dependent upon various factors, including their actual physical situation (e.g. indoors/outdoors) and also the actual population distribution at that time (e.g. due to peak hour traffic or an entertainment event). Therefore, the factors to consider are more dynamic than those taken into consideration in the population and geographic coverage $KPI_S$.

In other words, in practice these KPIs provide an indication of the expected customer experience, however, the actual user experience in terms of coverage (i.e. the user is making calls/sessions or receiving calls in his/her actual position during the day) is a more complicated issue since population distribution may vary by a set of factors including at least the following:

(a) the time of the day (e.g. located at home, travelling to work, located at work, travelling back home, etc.);
(b) working/non-working days (e.g. population distribution over the week-ends is typically different to a working day and it may also depend on weather conditions);
(c) holiday seasons: during these periods and depending on the country the population distribution may significantly change towards tourist resorts (ski-centre, sea-side, etc.) including remote and low populated areas in the rest period of the year.

The actually experienced network coverage can be expressed as follows:

$$P_{act\_cov}(A,t) = \frac{1}{N_{cust}(A,t)} \cdot \sum_{i=1}^{N_{cust}(A,t)} P_{RSS}(G_{pos}(i,t), \theta_{MT}(i)) \tag{6}$$

Where,
$P_{act\_coy}(A,t)$: the actually experienced coverage by customers located at time instance t in area A expressed as the percentage (%) of customers in area A which are in coverage;
$N_{cust}(A,t)$: The number of customers located in area A at the time instance t;
$G_{pos}(!,t)$: The actual position of customer i at time instance t;
$\theta_{MT}(i)$: the RSS threshold corresponding to the sensitivity of the Mobile Terminal (MT) receiver of customer i;
$P_{RSS}(G_{pos}(i,t) \theta_{MT}(i))$ is the coverage characterization function which in this case is defined as follows:

$$P_{RSS}(G_{pos}(i,t), \theta_{MT}(i)) = \begin{cases} 1 & if & RSS_{act}(G_{pos}(i,t)) \geq \theta_{MT}(i) \\ 0 & if & RSS_{act}(G_{pos}(i,t)) < \theta_{MT}(i) \end{cases} \tag{7}$$

Where, $RSS(G_{pos}(i,t))$ is the actual RSS value (not a predicted one) for the actual geographical position of customer i at time instance t (expressed as $G_{pos}(i,t)$).

It should be noted here that this function can be considered as the coverage experience of customer i at time instance t $P_{act-cov}(MT_i,t)$:

$$P_{act\_cov}(MT_i,t) = P_{RSS}(G_{pos}(i,t),\theta_{MT}(i)) \qquad (8)$$

In order to derive the actually experienced coverage for a time period T starting at time instance $t_1$ and ending at time instance $t_1$+ T the following formula applies:

$$P_{act\_cov}(A,T) = \frac{1}{T} \cdot \int_{t_1}^{t_1+T} P_{act\_cov}(A,t) \cdot dt \qquad (9)$$

And for the actually experienced coverage of a single customer i (due to Eq. (8)) we have:

$$P_{act\_cov}(MT_i,t) = \frac{1}{T} \cdot \int_{t_1}^{t_1+T} P_{act\_cov}(MT_i,t) \cdot dt \qquad (10)$$

From equations (6) to (10) it is evident that the estimation of the actually experienced coverage is a very hard issue as it is not possible for the network operator to have exact information on the actual customer position at all time instances as well as the actual RSS values at the specific position that each customer is located.

In order to further understand the difference between KPIs like population coverage and actually experienced coverage the actual coverage per pixel unit used in the population coverage analysis can be adopted: Assuming that customers are distributed in a number of k (k=1,2,...,K) different coverage environments (e.g., indoor, outdoor, deep-indoor, etc.) each characterized by a known RSS threshold $\theta_k$ common for all terminals. Moreover, we may assume that at a small area equal to a pixel unit the number of customers positioned in environment of type k is statistical stable during a time period T and equal to $N_{cust}(J,k,T)$. The same applies for the total number of customers located in the area A ($N_{cust}(A,T)$). In this case the actually experienced coverage can be expressed as follows:

$$P_{act\_cov}(A,T) \approx \frac{1}{N_{cust}(A,T)} \cdot \sum_{k=1}^{K} \sum_{j=1}^{M_A} P_{RSS}(j,\theta_k) \cdot N_{cust}(j,k,T) \qquad (11)$$

Assuming a stable distribution of customers in sub-areas An for time period T we get:

$$P_{act\_cov}(A,T) \approx \frac{1}{N_{cust}(A,T)} \cdot \sum_{n=1}^{N_A} \sum_{k=1}^{K} N_{cust}(j,k,T) \cdot \frac{1}{S(A_n)} \sum_{j=1}^{M_{A_n}} P_{RSS}(j,\theta_k) \cdot S(j) \Rightarrow$$

$$P_{act\_cov}(A,T) \approx \frac{1}{N_{cust}(A,T)} \cdot \sum_{n=1}^{N_A} \sum_{k=1}^{K} N_{cust}(j,k,T) \cdot P_{geo\_cov}(A_n,\theta_k) \qquad (12)$$

In order to understand the relationship between the actual experienced coverage versus the population coverage we consider a time-period $T_r$ which corresponds to an ideal situation which all customers are located very close to their residence (e.g., late evening hours) i.e.,

$$N_{cust}(A_n,k,T_r) = P_{MT}(A_n) \cdot N_{pop}(A_n) \cdot a_k(A_n,T_r) \qquad (13)$$

Where:

$a_k(A_n,T_r)$ is the portion of customers in area An located in environment k during time period $T_r$.
$P_{MT}(A_n)$ is the penetration of mobile customers of the operator under study in the population of area An. In relation to the operator customer penetration in the entire country the following applies:

$$P_{MT}(A) = \sum_{n=1}^{N_A} P_{MT}(A_n) \cdot N_{pop}(A_n) \qquad (14)$$

It is important to note here that the penetration of customers in an area An is a function of the coverage provided by the operator in this area. For example in a green-field network deployment the customers subscribe only in areas where there is coverage. This fact may create a variance in the customer penetration per area An. Once a network has reached a mature coverage level (e.g. population coverage higher than 80%) then this variance may get reduced.

To further simplify the approach we assume that for all areas a common distribution between environments applies and a common penetration rate also:

$$a_k(A_n, T_r) = a_k(A, T_r), \; P_{MT}(A_n) = P_{MT}(A) \qquad (15)$$

Under these assumptions we can express the actually experienced coverage as follows:

$$P_{act\_cov}(A, T_r) \approx \sum_{k=1}^{K} a_k(A, T_r) \cdot P_{pop\_cov}(A, \theta_k) \qquad (16)$$

From Eq. (14) it is evident that even under a significant number of simplifying assumptions the approximation of actually experienced coverage from population coverage is rather difficult to be estimated.

There is therefore a need for an alternative approach to measure and analyze coverage, particularly where customers experience problems. Such an approach would be also be advantageous for better understanding the network coverage.

Further, a modern trend in mobile network operation is the so called "customer centric management". Customer centric management is an area of network data analysis which aims to provide KPIs on a per MSISDN basis (i.e. a per user basis) in order to characterise individual customer experience. This analysis is useful in various applications such as addressing customer complaints (e.g. those that might arise due to a large number of missed calls outside their control), or tracking the Service Level Agreements (SLAs) offered to corporate customers.

Moreover, the cellular telecommunications industry does not take a single, common, approach to the assessment of network coverage of different networks in the same or different regions. Thus while geographic/population coverage KPIs are typical, it is often difficult to compare these models directly as they can be based on different assumptions (e.g. propagation prediction models, received signal strength thresholds, geographical database accuracy level, etc.) There is therefore also a need to be able to compare the coverage offered by different networks in an analogous manner.

Summary of the Invention

According to a first aspect the present invention provides, in a telecommunications network including a plurality of mobile terminals, a method of providing an indication of network coverage, the method including:

determining the occurrence of incoming call events in relation to at least one of the plurality of mobile terminals; recording a result of each incoming call event, together with at least one call property; and analysing the recorded incoming call data to determine an indication of experienced network coverage for the at least one terminal, a given terminal type, a given location and/or a given time period.

According to another aspect the present invention provides, in a telecommunications network including a plurality of mobile terminals, a network element configured to provide an indication of network coverage in relation one or more of the plurality of mobile terminals, a given mobile terminal type, a given location area and/or a given time period the network element configured to: determine the occurrence of incoming call events in relation to at least one of the plurality of mobile terminals; record a result of each incoming call event, together with at least one call property; analyse the recorded incoming call data to determine an indication of experienced network coverage for the one or more mobile terminal, a given terminal model type, a given location and/or a given time period.

These aspects of the invention can advantageously associate call events with customer experience. That is, the analysis of the communication events may be utilised to assess, and thereafter improve, a user's mobile terminal usage experience by identifying unreachable terminal situations, particularly out of coverage situations, and determining the cause, or at least a likely cause. The network experience indication can be used to initiate network improvements focused in areas where coverage problems are detected such as by optimizing base station radio parameters (e.g. antenna direction, tilt, power, etc.) in certain identified areas or deployment of additional sites. Moreover, considering the customer centric model certain types of customers can be targeted (e.g. customers complaining for coverage problems, high usage customers, etc.)

Advantageously, it has been recognised that users' actual distribution and need for communication is dynamic, and accordingly these aspects of the invention are capable of capturing actual user experience. These aspects of the invention are considered to be better correlated with users' needs to make and receive calls than the population and geographic KPIs currently in use.

More specifically, these aspects of the invention enable an indication of experienced network coverage to be derived from unsuccessful call attempts to/from a mobile terminal, particularly those due to out of coverage events.

According to a further aspect, there is provided in a telecommunications network including a plurality of mobile terminals, a method of providing an indication of network coverage in relation to at least one of the plurality of mobile terminals, the method including: determining the initiation of a call set up procedure from the at least one terminal; monitoring the duration of the call setup procedure; and identifying a failed call attempt when the call setup procedure duration exceeds a predetermined threshold.

Preferably, where a failed call attempt is identified, the timed set up duration is used to determine a reason for the failed call such as an unanswered paging event.

This approach can be achieved through monitoring of the network protocols or signalling links and is applicable to all types of mobile terminating calls (i.e., calls originating from and terminating to mobile customers of the same mobile network and calls terminating to mobile customers registered to in a network different than the one that the originating party is registered to).

This further aspect of the invention may also be implemented as a system, particularly as a network server implementing such a method. This further aspect of the invention, particularly when applied to a statistically significant number of communication initiation attempts, advantageously enables a realistic and comparable indication of actual network coverage to be obtained without requiring specific network information regarding reasons for call set up failures which is not always available at the signalling messages.

Other aspects of the invention are set out in the attached claims.

Brief Description of the Drawings

For a better understanding of the present invention a number of embodiments will now be described, by way of example, with reference to the accompanying drawings, in which:

Figure 1 illustrates an example telecommunication system architecture useful in describing embodiments of the invention;

Figure 2 illustrates a terminal status state model useful in describing embodiments of the invention;

Figure 3 illustrates a flow chart for a measurement procedure according to an embodiment of the invention; and

Figure 4 illustrates a flow chart for a measurement procedure according to a further embodiment of the invention.

Detailed Description

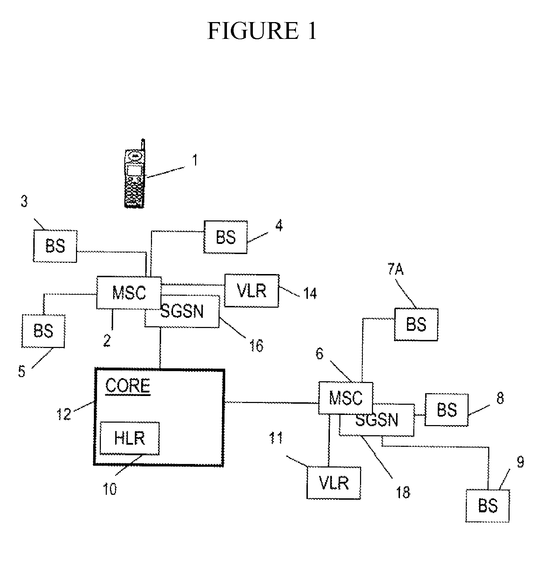

Figure 1 illustrates an example telecommunications network configuration in which embodiments of the present invention may be implemented.

The mobile terminal (1) may be any suitable portable device, including but not limited to a handheld mobile telephone, a personal digital assistant (PDA), dedicated traffic navigation device or a laptop computer equipped with a network connectivity datacard.

The telecommunications network illustrated includes a number of base stations (BS) 3,4,5,7A,8,9, where each BS includes an antenna system which serves a number of cells (e.g. three-sector cells) operating in one or multiple spectrum bands (e.g. 900MHz, 1800MHz, 2100MHz, etc.) and implementing one or multiple mobile network standards (e.g. GSM/GPRS, 3G/HSDPA, LTE, etc.) of the cellular/mobile telecommunication network. The mobile terminal will synchronize with a BS, typically the one providing it with the strongest signal (usually, but not necessarily, the closest BS) in order to be able to send and receive communications across the telecommunications network. Each base station serves a cell, and a set of cells controlled by the same core network switch node (e.g. the SGSN in UMTS [RTM]) is defined as a location area (LA).

When a terminal moves from one Location Area (LA) to another, or is switched on, its change in status is updated through a Location Registration procedure to a home location register (HLR) 10. This Location Registration procedure involves a core network node storing a unique terminal identifier, typically the IMSI, along with the LA identity, so that network traffic can be correctly directed towards the mobile terminal.

Then, when a terminating call is initiated towards the mobile terminal, the setup phase for terminating the call to the mobile terminal includes the following steps:

(a) HLR interrogation where the terminal status (attached/detached) as well as the LA where the terminal is currently roaming are retrieved (note that in the general case a mobile terminal may roam to another network according to the roaming standards in which case the HLR indicates the target network); and

(b) the core network switching node serving the target LA triggers a paging procedure through the radio access network that serves the target LA. During this paging procedure all cells covering the target LA broadcast a proper signalling message through the paging signalling channels with a proper terminal identity (e.g., in GSM this identity is the Temporary Mobile Subscriber Identity (TMSI)). The terminal is periodically monitoring the paging channels of the cell to which it has synchronized with and in the case that it detects its own identity it responds to the network in order to identify the exact cell through which the call setup process can be completed. In the case that the network receives no response from the paged terminal after a time-out threshold there may be an option to repeat paging broadcast for this terminal in the same LA. If there is still no response from the terminal then the terminal is apparently not reachable and the paging procedure is completed with an "unsuccessful" outcome.

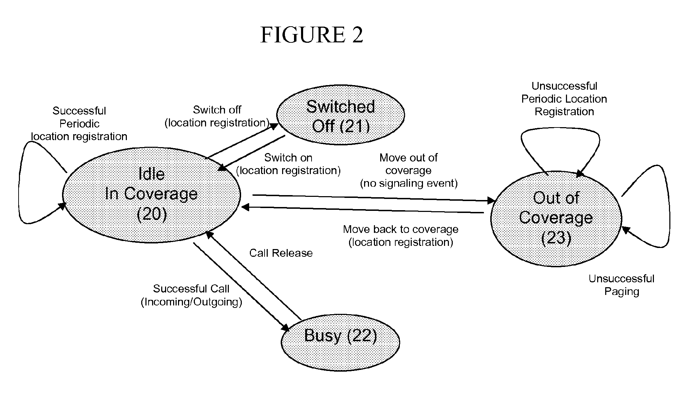

Whether or not a terminal can make and receive calls will depend upon its status. As illustrated in Figure 2, the state model for a communication attempt will typically have four different states:

- Idle, in coverage 20;
- Switched off 21;
- Busy 22; and
- Out of coverage 23.

When the terminal is idle and in coverage 20, it is able to perform all types of communication and signalling procedures (e.g., periodic location area update (LAU) registrations, receive paging requests, make originating calls, etc.) In other words, the standard cell selection and reselection process applies. When a terminal transits from idle and in coverage 20 to "switched off" 21, a location deregistration occurs, so the network knows it is in this state. In the case of an incoming call towards a switched off terminal the call setup is terminated at the interrogation phase as the HLR indicates that the terminal is switched off (i.e., paging procedure is not employed in this case). This may occur when the terminal is manually switched off by the user or due to an exhausted battery. When the terminal is subsequently switched on, it transits to "idle and in coverage" 20 again, and a location registration is performed, so that the network knows the terminal's status and current location area for any subsequent paging requests.

When a paging request to the mobile terminal is successful and there are available resources to serve a call, the terminal transits from "idle and in coverage" 20 to "busy" 22. This transition will similarly occur where the terminal initiates a call which is successfully set up. The terminal will remain in the busy state 22 (also referred as dedicated mode in the standards) until the call is released, thereby returning the terminal to "idle and in coverage" 20.

The final state is that of "out of coverage" 23 which will typically occur when the terminal remains switched on, but the received signal strength level is below a relevant threshold. This state will be unknown to the network, as when the terminal moves out of coverage, no signalling notification takes place. In the out of coverage 23 state, the terminal is not able to perform location area updates, nor is the network able to reach the terminal via paging. The terminal will exit this state when it moves back into coverage, thereby being able to successfully perform a location registration.

There is also a possibility for a terminal to enter the state "out of coverage" 23 from the "busy" 22 state. Such an event will cause the so called dropped-call case during which a call is forced to be released due to lack of adequate coverage.

With this background in mind, a first embodiment of the invention will now be described. This embodiment of the invention serves to provide a more accurate indication of the network coverage actually experienced by a user. More specifically, this embodiment of the invention provides an indication of the likelihood that a terminal is in an "out of coverage" 23 state.

In this embodiment, the data is preferably gathered at the MSC/VLR level. In this regard, the MSC and/or one or more network servers associated with the MSC, are configured so as to gather data relating to mobile terminating calls discriminating between the following cases:

- unsuccessful paging events;
- incoming calls towards terminals for which the periodical location registration timer has expired;
- successfully established incoming calls; and
- incoming calls to busy.

This data is preferably gathered and recorded in a database associated with the core network (e.g. the MSC/VLR), together with indicators of the terminal/user involved, the location and/or the time of the event. The location indication could be an indicator of the serving cell in case of a successful paging event or incoming call to busy. Alternatively, the location indicator may be in regard to a LA i.e., a group of base stations serving a particular region (e.g. a Location Area/Routing Area for MSC 2 or BS3-BS5).

The periodic location registration procedure is an additional source of events which, at the occurrence of an incoming call, can indicate out-of-coverage conditions. According to this procedure each mobile terminal after the completion of an interaction with the network (e.g. a call, a session, a location update, etc.) resets a timer with a network controlled time threshold which is known to both the terminal and the network (e.g. 3 hours). If the timer exceeds the threshold the terminal performs a periodic location registration and resets the timer. If at the time that the timer expires the terminal is out-of-coverage then it is not feasible to perform the periodic location registration procedure. In such a case the mobile terminal performs a location registration once it enters network coverage again. At the network side the periodic location registration is exploited as follows: on the event of the arrival of a call terminating to a mobile terminal the network estimates the time period between the current time and the time-stamp indicating the moment that the periodic location registration timer was reset (i.e., the most recent interaction with the terminal took place). If this time period is longer than the timer threshold then the network concludes that the terminal is out-of-coverage otherwise a periodic location registration would have been performed on the expiration of the timer and does not proceed with the paging procedure.

According to the above description on periodic location registration procedure it is evident that the network can monitor at the arrival of an incoming call the cases where the terminal is not reachable due to unsuccessful periodic location registration procedure associated to the ability of the terminal to communicate with the network. In the vast majority of the cases this phenomenon corresponds to out-of-coverage conditions. It is to be appreciated that there are a set of extraordinary cases where this may also apply such as the user extracting the terminal battery while the terminal is switched on (and thus the terminal cannot perform a detach procedure) or the terminal having some malfunction, etc., but these cases are not common and are unlikely to adversely affect the results.

The following Tables 1 and 2 provide an example of the types of information that can be gathered in this embodiment of the invention. Table 1 refers to the collection of data on a per MSISDN basis while Table 2 refers to the collection of data in the form of event counters:

TABLE 1

| A number (i.e. calling party) | B number (i.e. called party) | Date | Time | LAID | Event |
|---|---|---|---|---|---|
| +301234567890 | +301234567891 | 26/12/2009 | 00:03:45 | 100A | *Busy* |
| +301234567892 | +301234567893 | 26/12/2009 | 00:12:01 | 102E | Unanswered Paging |
| +301234567894 | +301234567895 | 26/12/2009 | 01:24:38 | 100A | Unanswered Paging |
| +301234567896 | +301234567897 | 26/12/2009 | 02:12:22 | 101B | Successful Call |
| +301234567898 | +301234567899 | 26/12/2009 | 02:13:45 | 100A | *Expired Periodic LR timer* |

TABLE 2

| LAID | Date | Time Period | Busy Attempts | Unanswered Paging | Expired Per. LR Timer | Answered Paging |
|---|---|---|---|---|---|---|
| *100A* | 26/12/2009 | 10:00'-10:15' | 1253 | 458 | 54 | 10834 |
| *100A* | 26/12/2009 | 10:15'-10:30' | 1420 | 542 | 58 | 14231 |
| *100A* | 26/12/2009 | 10:30'-10:45' | 1325 | 488 | 43 | 12394 |
| *100A* | 26/12/2009 | 10:45'-11:00' | 1290 | 423 | 42 | 11034 |
| *100A* | 26/12/2009 | 11:00'-11:15' | 1120 | 394 | 35 | 10235 |

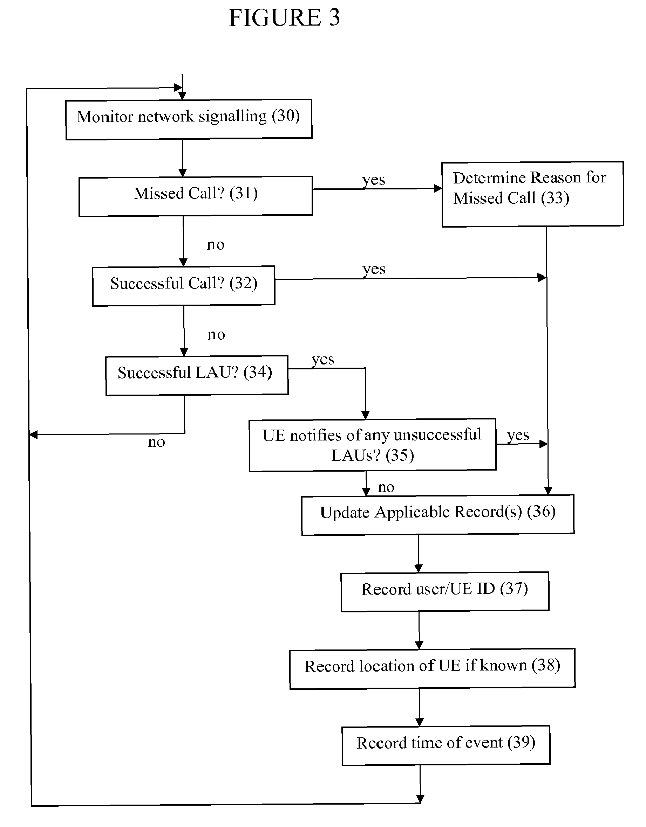

A procedure that may be used for obtaining this information is illustrated in Figure 3. The MSC/other network server is configured to monitor network signalling (30) in order to intercept the information regarding incoming call events (i.e. mobile terminating call set up). The calling party identity (Party A), called party identity (Party B), date and time information is the standard data set transmitted and shared in the network, and so is readily obtained. As an alternative to the MSC/server monitoring the network signalling for this data, however, the core network may be configured to send the necessary information to the server compiling the data.

From the network protocol operation at the network nodes, the server will be able to determine the occurrence of different types of mobile terminating call setup events:

- Incoming call towards a switched-off terminal (31)

- Incoming call towards a mobile terminal for which the periodic location registration timer has expired (32)

- Incoming call towards a mobile terminal for which the paging procedure was unsuccessful (i.e., unanswered paging) (33)

- Incoming call towards a busy mobile terminal (34)

- Successful mobile terminating call (35)

Once a missed call event is detected, and the reason determined, the server will make a record of the event (36). Alongside the record of the event, the server will also record an ID of the called party (37), and possibly also the calling party ID, and the time of the event (39). The server may also record the called party location (38) in terms of the Location Area (LA) recorded in the HLR as the current terminal location. An advantage of doing this is that this LA can then be associated with the LA to which the mobile terminal registers when it moves back into coverage, which may assist in identifying black spots in the network coverage.

This information can be continually recorded and logged as required. It is to be appreciated that the data may be logged in any suitable manner, including as a event table, as illustrated in the example of Table 1, or even as event counters on a per terminal basis (i.e. for each terminal being monitored, have counters for successful calls, etc.) which are linked to the relevant locations of the events. Alternatively if the scope of the measurement is the network and not the individual customer event counters per LA can be monitored deriving statistics for specific time periods (e.g. every 15') as shown in the example of Table 2.

The information compiled can be used in various ways in order to provide at least the following types of results:

- Network coverage analysis of the entire network;
- Network coverage analysis for part of the network up to the level of Location Areas;
- User centric analysis: coverage experience of a particular customer;
- User Group centric analysis: coverage experience for a particular group of customers;
- Terminal centric coverage experience analysis: coverage experience associated to a specific terminal type;
- Time based analysis of the network coverage:

    o Daily analysis
    o Time zone analysis (e.g. morning hours, working hours, evening hours, etc.)
    o Week-ends vs. normal working days analysis
    o Holiday seasons (summer, Christmas, etc.)

it should be noted that the analysis of terminal performance mentioned in the above list requires the identification of the device identity of the called mobile user. This information is only available for the calling mobile user (apart from where the MSISDN the International Mobile Equipment Identity or IMEI is available as part of the call setup signalling). However, typically only the MSISDN of the called user is made available at call setup phase. To identify the device used by a called mobile of the home mobile network the IMEI information provided in the CDRs (Call Detailed Records). To achieve this for a specific called MSISDN it is necessary to identify a CDR corresponding to a call at which the target MSISDN is the calling MSISDN. In such a CDR the IMEI of the target MSISDN will be recorded and thus retrieved.

Based on the following two facts it is possible to derive a relation between the above mentioned measured data and the actually experienced network coverage:

(a) from a statistical viewpoint the arrival process of calls terminating to mobile terminals is recognised to be well approximated by a Poisson arrival process and

(b) the terminal state model presented in Figure 2 is actually a Markovian state model (because the state at which the mobile terminal (MT) transits to, depends only on the previous state of the terminal).

From the above two facts it can now be derived that the portion of incoming calls corresponding to inability of the network to reach the terminal (i.e. unanswered paging and expired periodic LR timer) can be used to estimate the Out-of-Coverage probability assuming a steady state equilibrium for the Markovian model of Figure 2:

$$\lambda_{U\_PAG}(MT_i,T) + \lambda_{E\_PLR}(MT_i,T) = \lambda_{call\_in}(MT_i,T) \cdot P_{out\_cov}(MT_i,T) \Rightarrow$$

$$P_{out\_cov}(MT_i,T) \approx \frac{\lambda_{U\_PAG}(MT_i,T) + \lambda_{E\_PLR}(MT_i,T)}{\lambda_{call\_in}(MT_i,T)} = \frac{\left[N_{U\_PAG}(MT_i,T) + N_{E\_PLR}(MT_i,T)\right]/T}{N_{call\_in}(MT_i,T)/T} \Rightarrow \quad (17)$$

$$P_{out\_cov}(MT_i,T) \approx \frac{N_{U\_PAG}(MT_i,T) + N_{E\_PLR}(MT_i,T)}{N_{call\_in}(MT_i,T)}$$

Where:

$\lambda_{U-PAG}(MT_i,T)$ is the rate and $N_{u\text{-}PAG}(MT_i,T)$ the number of unsuccessful paging events for mobile terminal i (corresponding to a certain MSISDN) during the time period T.
$\lambda_{E-PLR}(MT_i,T)$ is the rate and $N_{E-PLR}(MT_i,T)$ the number of terminating call arrivals to mobile terminal i during the time period T for which the periodic location registration timer has expired.
$\lambda_{call\_in}(MT_i,T)$ is the rate and $N_{call-in}(MT_i,T)$ the number of terminating call arrivals to mobile terminal i during the time period T.
$P_{out\_cov}(MT_i,T)$ is steady state the probability that the $MT_i$ is out of coverage during time period T. In other words an estimation of the portion of time during which the MT is out of coverage.

**Actual Coverage Experience of Individual Customers**

In order to approach the estimation of the actually experienced network coverage by the customer we should take into account the fact that we are probably interested only for switched on terminals as switched off terminals in principle correspond to a state where the user is aware of being not reachable (either intentionally or due to battery outage which apparently is not related to network coverage). In this context the following probability should be estimated:

$$P_{out\_cov|swn}(MT_i,T) = \frac{P_{out\_cov}(MT_i,T)}{1 - P_{swf}(MT_i,T)} \quad (18)$$

Where:

$P_{out-cov|swn}(MT_i,T)$ is the steady state probability of the "switched on" terminal $MT_i$ to be in the out of coverage state during time period T.
$P_{swf}(MT_i,T)$ is the steady state probability of the terminal $MT_i$ to be in the "switched off" state during time period T.

The probability provided in Eq. (16) can be estimated based on the network measurements as follows:

$$P_{out\_cov|swn}(MT_i,T) \approx \frac{N_{U\_PAG}(MT_i,T) + N_{E\_PLR}(MT_i,T)}{N_{call\_in}(MT_i,T) - N_{swf}(MT_i,T)} \quad (19)$$

Where $N_{swf}(MT_i,T)$ is the number of calls terminating to terminal $MT_i$ during time period T for which the terminal was in "switched off" state.
The above KPI is meaningful for MTs which receive at least one incoming call while in switched-on state.
An issue that needs to be handled in such estimation is the calling user behavior in the case that a called mobile terminal is not reachable due to lack of coverage. In such a case the calling user receives an answer from an automatic response system that the called user is not reachable and depending on the case the call may be diverted to the called user's Voice Mail. The network operators have introduced more advanced solutions for such cases like the so called "Call Catcher" service. According to this service, as soon as the terminal is again attached to the network, the called user will receive an SMS with information on the missed calls during the time of not being reachable (switched off or out of coverage). In such a case the calling party may listen to a message like "the called user will be notified of your call as soon as the terminal becomes reachable".

In some cases, calling users may perform a number of repeated calls to the same unreachable user due to the need for on-the-spot communication to the called party and possibly where they consider that the called user's unreachability is due to a problem of a temporary nature. As a result of such cases the main assumption of "Poisson arrival process" for incoming calls is violated and may distort the estimation of out-of-coverage probability KPIs. To deal with this issue an appropriate filter can be applied in the MSISDN based data (see Table 1 ) where calls originating from a user (MSISDN1 ) and terminating to the same user (MSISDN2) with called party being in out-of-coverage state (i.e. either unsuccessful paging is performed or the periodic LR timer has expired) with a time difference less than a threshold (e.g. 1 minute) are filtered out and ignored in the estimation of out-of-coverage KPI$_S$. Therefore the KPI of Eq. (19) can now be expressed as follows:

$$P_{out\_cov|swn}(MT_i,T) \approx \frac{N_{U\_PAG}(MT_i,T) + N_{E\_PLR}(MT_i,T) - N_{U\_REP}(MT_i,\xi,T)}{N_{call\_in}(MT_i,T) - N_{swf}(MT_i,T) - N_{U\_REP}(MT_i,\xi,T)} \qquad (20)$$

Where $N_{U-REP}(MT_i,\xi,T)$ is the number of repeated calls within the time threshold $\xi$ (e.g. 1 minute) from the same MT to $MT_i$ when $MT_i$ was not reachable due to either unsuccessful paging or due to expired periodic LR timer.

It is considered that the above estimation is accurate provided that a substantial number of events are occurring so as to have statistical stability of the estimated probability. This may be an issue where we consider the coverage experience of a particular mobile terminal as a limited number of incoming calls are taking place on a daily basis. In order to achieve some statistical stability in the estimation of the coverage experienced by a specific mobile terminal either a longer term period T should be considered or the experience during a time period T should be averaged over a number of days as follows:

$$P_{out\_cov|swn}(MT_i,T,N_d) \approx \frac{1}{N_d} \cdot \sum_{d=1}^{N_d} \frac{N_{U\_PAG}(MT_i,T_d) + N_{E\_PLR}(MT_i,T_d) - N_{U\_REP}(MT_i,\xi,T_d)}{N_{call\_in}(MT_i,T_d) - N_{swf}(MT_i,T_d) - N_{U\_REP}(MT_i,\xi,T_d)} \qquad (21)$$

Where $N_d$ is the number of days considered and $T_d$ refers to the time period T (e.g. 10:00'-11:00') of day d.

In order to make the above estimation more accurate days can be split into working and non-working days as different user mobility patterns and call patterns occur depending on the day type.

Based on the analysis presented so far it is now evident that the actually experienced coverage by a specific customer i (or $MT_i$) defined in Eq. (10) can be expressed as follows:

$$P_{cov\_act}(MT_i,T) \approx 1 - P_{out\_cov|swn}(MT_i,T,N_d) \qquad (22)$$

The KPI can be used to identify problems for one or more users at particular time of the day (e.g. by identifying out-of-coverage problems in peak traffic hours) and can even further identify locations where those out of coverage problems occur at certain times. A wide variety of problems which cannot be detected through standard network statistics can be identified through such an analysis. For example the analysis can reveal the actual experience of particular customers complaining about coverage problems. The operator can analyze the actual coverage experience for this customer and identify whether there is some unusual pattern in the recent customer experience (e.g. related to a network outage) or overall the customer experience is poor compared to the average customer experience. Moreover, the analysis can identify the areas (with an accuracy of a Location Area) where the user experiences problems helping thus the operator to propose some relevant solution to the customer (e.g. provide a signal booster for the user's house or office premises, introduce a micro base station, tune a base station, etc.)

**Actual Coverage Experience in specific Areas**

To derive the relevant KPIs for a specific area A (e.g. a Location Area) then the following KPI for the estimation of the out-of-coverage probability for switched on MTs in area A during time period T ($P_{out\ cov|swn}(A,T,N_d)$) can be applied:

$$P_{out\_cov|swn}(A,T,N_d) \approx$$
$$\approx \frac{1}{N_d} \cdot \sum_{d=1}^{N_d} \sum_{i=1}^{N_{cust}(A,T_d)} \frac{N_{U\_PAG}(MT_i,T_d) + N_{E\_PLR}(MT_i,T_d) - N_{U\_REP}(MT_i,\xi,T_d)}{N_{call\_in}(MT_i,T_d) - N_{swf}(MT_i,T_d) - N_{U\_REP}(MT_i,\xi,T_d)} \approx \quad (23)$$
$$\approx \frac{1}{N_d} \cdot \sum_{d=1}^{N_d} \sum_{i=1}^{N_{cust}(A,T_d)} P_{out\_cov|swn}(MT_i,T_d)$$

In terms of statistical stability of this KPI it can be seen that as a high number of MTs is served by a LA this KPI can achieve statistical stability even for a single day ($N_d$=1 ).

This KPI can be exploited so as to approximate the KPI of Eq. (9) i.e., the actually experienced coverage in area A:

$$P_{cov\_act}(A,T) \approx 1 - P_{out\_cov|swn}(A,T,N_d) \quad (24)$$

From Eqs. (22) and (24) it is evident that the monitoring of events related to out-of-coverage conditions at the arrival of calls terminating to mobile terminals can indeed provide an estimation of the actually experienced network coverage.

An alternative KPI to the one provided in Eq. (24) is the following:

$$P_{w\_out\_cov|swn}(A,T,N_d) \approx \frac{1}{N_d} \cdot \sum_{d=1}^{N_d} \frac{N_{U\_PAG}(A,T_d) + N_{E\_PLR}(A,T_d) - N_{U\_REP}(A,\xi,T_d)}{N_{call\_in}(A,T_d) - N_{swf}(A,T_d) - N_{U\_REP}(A,\xi,T_d)} \quad (25)$$

Where:

$Nu_{PAG}(A,T_d)$ is the number of unsuccessful paging events for area A during the time period $T_d$.
$N_{E\text{-}PLR}(A,T_d)$ is the number of terminating call arrivals to area A during the time period $T_d$ for which the periodic location registration timer has expired.
$N_{call\text{-}in}(A,T_d)$ is the number of terminating call arrivals to area A during the time period $T_d$.
$N_{U\text{-}REP}(A,\xi,T)$ is the number of repeated calls within the time threshold $\xi$ (e.g. 1 minute) from the same MT to the same $MT_i$ in area A when $MT_i$ was not reachable due to either unsuccessful paging or due to expired periodic LR timer.

The benefit of this KPI (25) from the calculation viewpoint is that with the exception of $N_{U\_REP}(A,\xi,Td)$ it can be directly derived from the set of counters presented in the example of Table 2 (while KPI of Eq. (24) requires analysis of data per MSISDN presented in the example of Table 1 ). As the parameter $N_{U\_REP}(A,\xi,Td)$ is dependent on the calling party behavior which is not related to the area A where the called party is located as well as the time period under study it is safe to consider the following assumption:

$$N_{U\_REP}(A,\xi,T_d) \approx a_{REP}(\xi) \cdot \left[ N_{U\_PAG}(A,T_d) + N_{E\_PLR}(A,T_d) \right] \quad (26)$$

Where $\alpha_{REP}(A,\xi,Td)$ is the portion of repetitive incoming calls to MTs with either unanswered paging ($N_{U\text{-}PAG}(A,T_d)$) or expired periodic LR timer ($N_{E\text{-}PLR}(A,T_d)$) (i.e., detected in out-of-coverage state) in area A during period $T_d$ and according to threshold $\xi$. This parameter can be estimated based on an off-line analysis of data with events at the MSISDN level (see example of Table 1 ). Based on this approach we have:

$$P_{w\_out\_cov|swn}(A,T,N_d) \approx \frac{1}{N_d} \cdot \sum_{d=1}^{N_d} \frac{\left[N_{U\_PAG}(A,T_d) + N_{E\_PLR}(A,T_d)\right] \cdot \left(1 - a_{REP}(\xi)\right)}{N_{call\_in}(A,T_d) - N_{swf}(A,T_d) - a_{REP}(\xi) \cdot \left[N_{U\_PAG}(A,T_d) + N_{E\_PLR}(A,T_d)\right]}$$

$$(27)$$

Where:

$N_{swf}(A,T_d)$ is the number of calls terminating to area A during time period $T_d$ for which the called terminals were in a "switched off" state.

$N_d$: is the number of days for which samples over the time period $T_d$ are averaged in order to obtain a stable statistical estimation.

Now the following equation provides the relation between KPI of Eq. (27) with the one of Eq. (23):

$$P_{w\_out\_cov|swn}(A,T,N_d) \approx \frac{1}{N_d} \cdot \sum_{d=1}^{N_d} \sum_{i=1}^{N_{cust}(A,T_d)} \frac{N_{call\_in}(MT_i,T_d)}{N_{call\_in}(A,T_d)} \cdot P_{out\_cov|swn}(MT_i,T_d,N_d) \Rightarrow$$

$$(28)$$

$$P_{w\_out\_cov|swn}(A,T,N_d) \approx \frac{1}{N_d} \cdot \sum_{d=1}^{N_d} \sum_{i=1}^{N_{cust}(A,T_d)} w_{call\_in}(MT_i,T_d) \cdot P_{out\_cov|swn}(MT_i,T_d,N_d)$$

Where $w_{call\_in}(MT_i,T_d)$ is the portion of incoming calls in area A which are terminated to $MT_i$ during the time period $T_d$. From Eqs. (28) and (23) it can be seen that the KPI of Eq. (23) considers that each MT has the same significance while in the KPI of Eq. (28) the experience of each MT is weighted with the number of incoming calls it receives or in other words with its communication needs.

This provides the means to provide a weighted coverage experience KPI as follows:

$$P_{w\_cov\_act}(A,T) \approx 1 - P_{w\_out\_cov|swn}(A,T,N_d)$$

$$(29)$$

Where $P_{w-cov-act}(A,T)$ is defined as follows:

$$P_{w\_act\_cov}(A,T) = \frac{1}{T} \int_{t_1}^{t_1+T} \frac{1}{N_{cust}(A,t)} \cdot \sum_{i=1}^{N_{cust}(A,t)} w_{call\_in}(i,T) \cdot P_{RSS}(G_{pos}(i,t), \theta_{MT}(i)) \qquad (30)$$

Where the parameters $N_{cust}(A,t)$, $G_{pos}(i,t)$, $\theta_{MT}(i)$ and $P_{Rss}(G_{pos}(i,t), \theta_{MT}(i))$ are the ones defined in Eq. (6).

This KPI (30) expresses the actually experienced coverage weighted by the incoming communication needs of the customers. As a consequence this KPI is quite attractive both from calculation simplicity and from the customer experience viewpoint. Moreover, this KPI analysis can provide an overall network satisfaction estimation (i.e. not location specific) if area A is selected to be the entire network area. The KPI can also be used to identify coverage problems in more specialized areas with the accuracy of a Location Area (LA) (i.e. a set of cells) where, depending on the time zone in which a problem occurs, different conclusions on the coverage problems may result. For example if coverage problems occur during time zones where customers are located indoors (either at home or at work environment i.e., late evening or during working hours) then the problem can be related to the quality of indoor coverage. On the other hand if the problem occurs during the time that customers move from house to work and vice versa (e.g. 7:30'-9:30' in the morning) then the coverage problem can be related to the quality of coverage in the city main highways. A similar analysis can be performed for non-working days and holiday periods in order to identify coverage problems in areas visited by customers during such periods (e.g. a holiday resort).

Advantageously the network coverage approximation provided by this KPI is not based upon expected location or the coverage provided at that expected location (i.e. as per population coverage), but instead gathers real data for mobile terminals as they move about the network, and is therefore a truer indication of their network experience.

**Ranking of Device Models by Actual Coverage Performance**

In another aspect of the invention the data monitored by the network can be exploited so as to characterize the coverage experience in association with a terminal type. To achieve an association between the called MSISDN and the terminal type used by this MSISDN should be created. This is feasible through a terminal identity called IMEI (International Mobile Equipment Identity) as the first 8 digits of this number represent the mobile terminal model. The IMEI information is available in the network CDRs however, generally only for the calling party and not for the called party. Therefore, the CDRs can be used to associate the called MSISDNs with the appropriate IMEIs (off-line processing). With the information of the device models it is then feasible to produce a KPI related to the experienced coverage with the used device model ($ME_i$):

$$P_{w\_out\_cov|swn}(ME_i, T, N_d) \approx \frac{1}{N_d} \cdot \sum_{d=1}^{N_d} \frac{N_{U\_PAG}(ME_i, T_d) + N_{E\_PLR}(ME_i, T_d) - N_{U\_REP}(ME_i, \xi, T_d)}{N_{call\_in}(ME_i, T_d) - N_{swf}(ME_i, T_d) - N_{U\_REP}(ME_i, \xi, T_d)} \Rightarrow$$

$$P_{w\_out\_cov|swn}(ME_i, T, N_d) \approx \frac{1}{N_d} \cdot \sum_{d=1}^{N_d} \frac{\left[N_{U\_PAG}(ME_i, T_d) + N_{E\_PLR}(ME_i, T_d)\right] \cdot (1 - a_{REP}(\xi))}{N_{call\_in}(ME_i, T_d) - N_{swf}(ME_i, T_d) - a_{REP}(\xi) \cdot \left[N_{U\_PAG}(ME_i, T_d) + N_{E\_PLR}(ME_i, T_d)\right]}$$

$$(31)$$

And the actual coverage associated with mobile device model $ME_i$ will be:

$$P_{w\_act\_cov}(ME_i, T) \approx 1 - P_{w\_out\_cov|swn}(ME_i, T, N_d) \qquad (32)$$

It should be noted that the time period T in this case can be selected to be e.g. the busy hour or it may selected to be a day, a week or a month as the terminal performance over longer time periods may be of interest.

The results of such an analysis can be used in order to rank mobile device models according to their coverage performance. Assuming a substantially high number of sampled devices it is reasonable to use this benchmarking for characterizing the device performance in reference to its ability to be reachable. Devices may have significant differences in their receiver performance due to a number of factors like the antenna sensitivity, the device design, the signal processing unit of the device, the implementation of standards (e.g. idle mode operation, switching from 2G to 3G), etc. As a result this analysis may become helpful especially in identifying problematic device models. Similar analysis is already available in reference to the performance of the devices vs. the rate of dropped calls per device. However, the analysis of actual experienced coverage may capture different aspects of the terminal performance. The identification of device performance problems can be provided as a feed-back to the device manufacturer for corrective actions in the current or in future device models.

**Coverage Experience Analysis based on Signalling Links Monitoring**

According to an additional embodiment of the invention, rather than using the MSC or a network element associated therewith to gather the data, the data gathering may be performed by monitoring the signalling links of the network through appropriate probing systems (e.g. using the typical passive probing systems currently exploited in telecommunication networks). According to this technique the call setup messages terminating to mobile terminals can be analysed in order to determine the following cases:

- Successful Call Setup: as indicated by the content of the signalling message which is part of the call setup process.
- Calling party is busy: this case may also be indicated in the contents of the call setup signalling messages.
- Failed Call Setup: In this case the reason of failure is not evident from the signalling message content. It may be due to the fact that the terminal was found to be in switched-off status at the HLR or the periodic location registration timer was expired, there might be an unanswered page or even some traffic channel congestion in the cell of the called party.

It should be noted here that "successful call setup process" in the context of this analysis refers to the case that "ringing tone" phase is entered. Therefore a call which enters the ringing phase but not answered by the called party is not considered unsuccessful in this analysis.

A problem with analysing call set up messages is the fact that the signalling messages do not provide information that allows the identification of unsuccessful paging events. However, the current embodiment of the invention provides an alternative method to detect such events. The way to identify unsuccessful paging events is by monitoring the duration of the call setup procedure. From the way that call setup procedure is performed it has been realised that unsuccessful paging events correspond to longer call setup duration versus other cases of failed call setup. Indeed the call setup procedure steps include:

- HLR interrogation: switched off terminals as well as terminals with expired periodic location registration timer are identified at this step.
- VLR access: busy terminals are identified at this step.
- Paging: Paging procedure exploits a timer in order to allow for the terminal enough time to respond and depending on the network configuration paging broadcast can be repeated in order to conclude an unsuccessful paging event.

As a result of the above sequence of the call setup procedure an unsuccessful paging event exhibits longer call setup duration than other cases of unsuccessful call setup. Therefore if we define a threshold (e.g. 6 seconds) according to which calls terminating to mobile terminals are characterized depending on whether the call setup duration exceeds this threshold can approximate the number of calls with unanswered paging.

The number of failed call setup events for mobile terminating calls monitored at the signaling links can be provided by the following equation:

$$N_{U\_call\_in}(x,T,N_d) = N_{U\_PAG}(x,T,N_d,\zeta) + N_{swf}(x,T,N_d) + N_{E\_PLR}(x,T,N_d) + N_{other}(x,T,N_d) \quad (33)$$

Where:

x: a generic notion of three options of the analysis to be performed: (a) x=MT. for defining the KPIs for a specific MSISDN, (b) x=A where A is a network area ranging from an LA to the entire network and (c) x=ME$_i$ for KPI analysis for a specific mobile terminal model.

$N_d$: as defined already is the number of days for which samples over the time period T are averaged in order to obtain a stable statistical estimation.

$N_{u\text{-call-in}}(x,T)$: is the number of failed mobile terminating call setup events during time period T for entity x.

$Nu_{PAG}(x,T,\zeta)$: is the number of unanswered paging events during time period T resulting based on the call setup duration threshold $\zeta$ for entity x.

$N_{swf}(x,T)$: is the number of unsuccessful mobile terminating call setups during time period T resulting due to switched off called MT for entity x. Note this parameter cannot be measured from the signaling links monitoring. It is typically determined from a status in the HLR.

$N_{E-PLR}(x,T)$: is the number of unsuccessful mobile terminating call setups during time period T resulting due to expired periodic LR timer for the called MT for entity x. Note this parameter also cannot be measured from the signaling links monitoring.

$N_{other}(x,T)$: is the number of unsuccessful mobile terminating call setups during time period T resulting due to some other reason than the ones provided above for entity x (e.g. unanswered paging or traffic congestion). This is yet another parameter cannot be measured from the signaling links monitoring.

It is evident that in order to be in a position to provide some estimation of the experienced coverage then the required parameters which are not directly monitored from the signaling links should be estimated. This is achieved as follows:

$$N_{swf}(x,T,N_d) = a_{swf}(T) \cdot N_{U\_call\_in}(x,T,N_d) \quad (34)$$

$$N_{E\_PLR}(x,T,N_d) = a_{plr}(T) \cdot N_{U\_call\_in}(x,T,N_d) \quad (35)$$

Where:

$\alpha_{swf}(T)$: is the portion of failed mobile terminating call setup events due to the called MT being switched off for entity x.

$\alpha_{plr}(T)$: is the portion of failed mobile terminating call setup events due to the expired periodic location registration timer of the called MT for entity x.

It should be noted here that such KPIs can be derived based on off-line analysis of data derived from network elements. However, their statistical stability can prove relevant for an analysis referring either to area level (x=A) or mobile device model (x=$ME_i$). In the case of analysis for specific MTs (x=$MT_i$) these KPIs cannot be estimated directly from the signaling links.

Based on the information provided in the signaling links it is possible to perform an analysis of repetitive calls following an unsuccessful paging attempt based on a threshold ξ as described already (NREP(X,T,ξ)). Alternatively the parameter αREP(ξ) defined in Eq. (26) can be exploited as this parameter is related to calling party behavior. However, this approach is statistically relevant only for area level analysis (x=A) or mobile device model analysis (x=$ME_i$).

Based on the above assumptions the actually experienced network coverage can be expressed as follows:

$$P_{cov\_act}(x,T,N_d) \approx$$

$$\approx 1 - \frac{1}{N_d} \cdot \sum_{d=1}^{N_d} \frac{\left[ N_{U\_PAG}(x,T_d,\zeta) + a_{PLR}(x,T_d) \cdot N_{U\_call\_in}(x,T_d) \right] \cdot (1 - a_{REP}(\xi))}{N_{call\_in}(x,T_d) - N_{U\_call\_in}(x,T_d) \cdot \left[ a_{swf}(x,T_d) + a_{PLR}(x,T_d) \cdot a_{REP}(\xi) \right] - N_{U\_PAG}(x,T_d,\zeta) \cdot a_{REP}(\xi)}$$

$$(36)$$

Where $\alpha_{REP}(\xi)$ is the portion of repetitive incoming calls to MTs with either unanswered paging or expired periodic LR timer according to threshold ξ.

It is evident that the above KPI (36) is relevant for area level and mobile device model analysis (i.e. x=A or x=$ME_i$). For analysis per MT (x=$MT_i$) and in the case that no other source of information is available an approximation analysis can be used focusing only on unsuccessful paging analysis and ignoring the switched off and expired periodic location registration timer events parameters.

In another embodiment of the invention, the KPI derived from signalling links monitoring may also be derived for other networks provided that it is feasible to monitor the signalling links which serve the interconnection traffic between the two networks. In such a case it is possible to compare different networks against the same benchmark in order to identify differences in the experienced coverage. This KPI therefore avoids incompatibilities between the currently used coverage estimates, and can even facilitate benchmarking between different networks, including between peer networks and networks in other regions (e.g. between Vodafone Greece and Vodafone Italy). It is to be appreciated that this embodiment of the invention only considers outgoing communications from one or more mobile terminals of the home network towards the adjacent networks and not incoming communications.

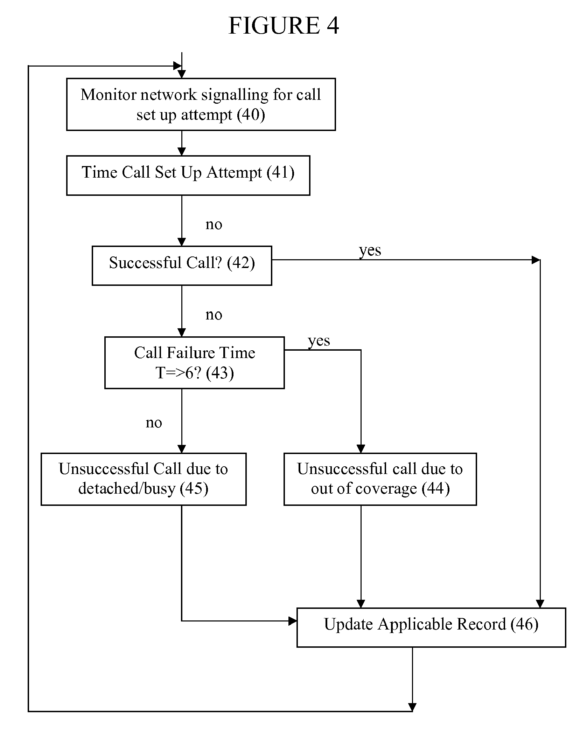

This embodiment of the invention will now be explained in more detail with reference to the flow chart of Figure 4.

This embodiment of the invention is particularly useful for benchmarking, i.e. gauging the efficiency of networks operating adjacent to the primary network. Here, the term "adjacent" networks does not indicate networks that are somehow literally adjacent, but rather those which are interconnected with the primary network, such as in other regions/ countries or operated by a separate network operator. Essentially an adjacent network is therefore one from which specific data in relation to unsuccessful call attempts, busy call attempts and the like are not directly obtainable. That is, they are networks that the primary network operates along side, and whilst the networks cooperate to allow interoperability, not all data is shared.

This embodiment of the invention enables this lack of full data sharing to be overcome, by making intelligent estimates of unsuccessful call attempts and the like. More specifically, these intelligent estimates are based upon the duration of a call set-up procedure. With reference to Figure 4, the network server implementing the embodiment will monitor calls (40) being initiated from its home network. When an outgoing call is detected, a timer is initiated to time the call set up procedure (41). This may be performed for all outgoing calls from the home network or only those which are being directed outside of the home network. This latter approach is possible using probes deployed over the signalling links serving the inter-connection of two networks.

As it can be seen from Figure 4, it is feasible to identify successful call setup (42), unsuccessful paging events (by monitoring the call setup duration (41) and examining whether the measured call setup duration is equal or longer than a predetermined threshold $T_{U-PAG}$ (43)) and other call setup non-completion cases (44, 45) (e.g. called terminal busy, switched off, expired periodic location registration timer, etc.)

If the call is successful, as with the previous embodiments of the invention, a record or relevant counter can be updated to record this event (46). In case plain counters are implemented then the total number of call setup attempts and the unsuccessful paging events are counted per monitored adjacent network so as to provide an estimate of KPI (16). In the case a record is stored then information like the adjacent network identity, a time-stamp of the event, the event type and the called party MSISDN can be stored per record.

In this regard, it has been found that an unsuccessful call set up due to unanswered paging typically takes at least 2-4 seconds more time to complete versus other cases of unsuccessful call setup. Moreover, a threshold of $T_{U\_PAG}$ in the order of 8 seconds appears to be appropriate for this embodiment of the invention. However, this threshold should be tuned for the specific network to be monitored as this is subject to network implementation and configuration aspects.

Ideally the analysis of these embodiments of the invention is performed on a regular basis in order to identify problems quickly, and ideally as they arise. In a similar manner the data may be compared with networks operating in different localities in order to identify problems that may exist in theoretically equivalent environments.

In a further embodiment of the invention, the analysis can simply be in regard to the mobile terminals (i.e. MSISDNs) that experience the highest number of unsuccessful paging events. The rationale for this analysis is that regardless of the number of incoming calls per MSISDN, if the number of missed calls exceeds a certain threshold, then the user will become concerned of the problems associated with network coverage or the terminal performance in idle mode operation.

It is to be appreciated that whilst the embodiments of the invention have been described with particular reference to an unreachable event due to a network/terminal or standard problem, an additional situation where such an event could apply is in the event of an accidental or intentional device termination, such as would occur where the battery is pulled out (i.e. in this situation the terminal does not have time to initiate a network detach message). This situation is unlikely to greatly affect the analysis since it is a very rare occurrence.

Further, the embodiments of the invention have been described and illustrated through the specific figures with particular reference to a network having 2G and 3G access technologies. However, alternatively or in addition, other access technologies are envisaged such as LTE and MIMO technologies (particularly 3G MIMO techniques such as WCDMA and HSPA) or future terminal models supporting these access technologies can be addressed accordingly.

Additionally, the embodiments of the invention have been specifically described in relation to unsuccessful call attempts, which includes unsuccessful voice and video calls. The embodiments of the invention may also be adapted for other services available on cellular networks, such as Instant Messaging, push-to-talk, etc.

Other important features of the invention are set out in the following numbered paragraphs:

1 In a telecommunications network including a plurality of mobile terminals, a method of providing an indication of network coverage in relation to at least one of the plurality of mobile terminals, the method including:

determining the initiation of a call set up procedure from the at least one terminal;
monitoring the duration of the call setup procedure; and
identifying a failed call attempt when the call setup procedure duration exceeds a predetermined threshold.

2 The method of paragraph 1 further including, where a failed call attempt is identified, using the timed set up duration to determine a reason for the failed call such as an unanswered paging event.

3 The method of paragraph 1 or 2 further including using the failed call set up events to obtain an indication of network coverage for a given region, a given user terminal, a given terminal type and/or a given time period.

4 The method of paragraph 1, 2 or 3 further including, where the call set procedure is not successful, and a reason cannot be determined from the content of signalling messages, then:

where the timed set up equals or exceeds the threshold, the failed communication is determined to be due to an unanswered paging event; and/or
where the timed set up is less than the threshold, the failed communication is determined to be due to other reasons, such as the called terminal being detached/busy.

5 The method of any one of paragraphs 1 to 4 further including:

determining successful call set up events and busy calling party events from the content of signalling messages; and
additionally using the successful call set up events to obtain the indication of network coverage.

6 The method of any one of paragraphs 1 to 5 further including:

using the unsuccessful call set up events in order to obtain the indication of network coverage for a plurality of different networks; and
comparing the indications for the different networks.

7 A network element configured to perform the method of any one of paragraphs 1 to 6.

**Claims**

1. In a telecommunications network including a plurality of mobile terminals, a method of providing an indication of network coverage, the method including:

   determining the occurrence of incoming call events in relation to at least one of the plurality of mobile terminals;
   recording a result of each incoming call event, together with at least one call property; and
   analysing the recorded incoming call data to determine an indication of experienced network coverage for the at least one terminal, a given terminal type, a given location and/or a given time period.

2. The method of claim 1 further including determining the result of each incoming call event to be recorded from at least the following options:

   a) a successful call including a successfully established call and/or successful terminating call attempt;
   b) an unanswered paging;
   c) called terminal busy;
   d) called terminal detached from network; and
   e) a failed incoming call due to an expired periodic location registration update timer.

3. The method of any one of the preceding claims further including determining the at least one call property to be recorded from at least the following options:

   an identity of the called party;
   a time period applicable to the call;
   a location applicable to the called party;
   an identity of the terminal type for the called party;
   the mobile network of the calling and the called party.

4. The method of any one of the preceding claims wherein the analysis of the recorded data includes determining an indication of the network coverage experienced by a given mobile terminal or mobile terminal type ($P_{cov-act}$) according to the following equation:

$$P_{\text{cov}\_act} \approx 1 - P_{out\_\text{cov}|swn}$$

where:

$$P_{out\_\text{cov}|swn} \approx \frac{N_{U\_PAG} + N_{E\_PLR}}{N_{call\_in} - N_{swf}}$$

and:

$P_{out\_cov|swn}$ relates to the out of coverage probability for switched on mobile terminals;
$N_{u\,PAG}$ relates to the number of unsuccessful paging events to mobile terminals;
$N_{E\_PLR}$ relates to the number of terminating call arrivals to mobile terminals for which the applicable periodic location registration timer has expired; and
$N_{call\_in}$ relates to the number of terminating call arrivals to mobile terminals;
$N_{swf}$ relates to the number of calls terminating to mobile terminals for which the called terminal was in a switched off state.

5. The method of claim 4 further including averaging the equation over one or more given time periods in order to achieve statistical stability.

6. The method of claim 4 or 5 further including filtering out repeated calls to unreachable mobile terminals within a predetermined time threshold.

7. The method of any one of the preceding claims wherein the analysis of the recorded data includes determining an indication of the network coverage experienced in a given area (A) during time period (T) using the following equation:

$$P_{w\_out\_\text{cov}|swn} \approx \frac{1}{N_d} \cdot \sum_{d=1}^{N_d} \frac{N_{U\_PAG} + N_{E\_PLR} - N_{U\_REP}}{N_{call\_in} - N_{swf} - N_{U\_REP}}$$

where:

P_{w−out−cov|swn} is the out of coverage probability for switched on mobile terminals in area A during time period (T);
$N_{U−PAG}$ is the number of unsuccessful paging events in area A to mobile terminals during the time period T;
$N_{E−PLR}$ is the number of terminating call arrivals in area A to mobile terminals during the time period T for which the applicable periodic location registration timer has expired; and
$N_{call\_in}$ is the number of terminating call arrivals in area A to mobile terminals during the time period T;
$N_{swf}$ is the number of calls terminating in area A to mobile terminals during time period T for which the called terminal was in a switched off state; and
$N_{u−REP}$ is a portion of repetitive incoming calls in area A to mobile terminals within time threshold $\xi$.

8. The method of any one of claims 4 to 7 further including determining $N_{U−PAG}$, $N_{E−PLR}$, $N_{call\_in}$ and $N_{swf}$ from:

a) event counters on a per terminal basis; or
b) event counters on a location basis

9. The method of any one of the preceding claims wherein the analysis of the recorded data includes determining an indication of the network coverage experienced in a given area (A) during time period (T) according to the following equation:

$$P_{w\_act\_\text{cov}}(A,T) = \frac{1}{T} \int_{t_1}^{t_1+T} \frac{1}{N_{cust}(A,t)} \cdot \sum_{i=1}^{N_{cust}(A,t)} w_{call\_in}(i,T) \cdot P_{RSS}(G_{pos}(i,t),\theta_{MT}(i))$$

10. The method of any one of claims 4 to 9 further including analysing the data to perform at least one of the following applications:

identify network coverage problems in given areas or at given times;
handle customer complains related to network coverage;
benchmark mobile terminal performance versus coverage experience;
benchmark different mobile networks versus the offered network coverage experience.

11. In a telecommunications network including a plurality of mobile terminals, a network element configured to provide an indication of network coverage in relation one or more of the plurality of mobile terminals, a given mobile terminal type, a given location area and/or a given time period the network element configured to:

determine the occurrence of incoming call events in relation to at least one of the plurality of mobile terminals;
record a result of each incoming call event, together with at least one call property;
analyse the recorded incoming call data to determine an indication of experienced network coverage for the one or more mobile terminal, a given terminal model type, a given location and/or a given time period.

12. The network element of claim 11 further configured to analyse the recorded data by determining the indication of the network coverage using the following equation:

$$P_{w\_out\_\text{cov}|swn} \approx \frac{1}{N_d} \cdot \sum_{d=1}^{N_d} \frac{N_{U\_PAG} + N_{E\_PLR} - N_{U\_REP}}{N_{call\_in} - N_{swf} - N_{U\_REP}}$$

wherein:

$P_{w-out-cov|swn}$ relates to the out of coverage probability for switched on mobile terminals;
$N_{u-PAG}$ relates to the number of unsuccessful paging events to mobile terminals;
$N_{E-PLR}$ relates to the number of terminating call arrivals to mobile terminals for which the applicable periodic location registration timer has expired; and
$N_{call\_in}$ relates to the number of terminating call arrivals to mobile terminals;
$N_{swf}$ relates to the number of calls terminating to mobile terminals for which the called terminal was in a switched off state; and
$N_{U-REP}$ is a portion of repetitive incoming calls to mobile terminals within a predetermined time threshold.

13. The network element of claim 12 further configured to use the equation to determine the actual network coverage for:

i) the one or more mobile terminals during a time period T
ii) the given mobile terminal type during a time period T; and/or
iii) the given location area A.

14. The network element of any one of claims 11 to 13 further configured to analyse the recorded data by determining an indication of the network coverage experienced in a given area (A) during time period (T) according to the following equation:

$$P_{w\_act\_\text{cov}}(A,T) = \frac{1}{T} \int_{t_1}^{t_1+T} \frac{1}{N_{cust}(A,t)} \cdot \sum_{i=1}^{N_{cust}(A,t)} w_{call\_in}(i,T) \cdot P_{RSS}(G_{pos}(i,t), \theta_{MT}(i))$$

15. The network element of any one of claims 11 to 14 further configured to use the data analysis to identify network coverage problems in given areas or at given times.

# FIGURE 1

FIGURE 2

# FIGURE 3

# FIGURE 4

```
          ┌──────────────────────────────┐
          │  Monitor network signalling   │
          │   for call set up attempt (40)│
          └──────────────────────────────┘
                        │
                        ▼
          ┌──────────────────────────────┐
          │  Time Call Set Up Attempt (41)│
          └──────────────────────────────┘
                        │  no
                        ▼
          ┌──────────────────┐     yes
          │ Successful Call? (42)├──────────────────────────┐
          └──────────────────┘                              │
                        │  no                                │
                        ▼                                    │
          ┌──────────────────┐     yes                       │
          │ Call Failure Time │──────────┐                   │
          │   T=>6? (43)      │          │                   │
          └──────────────────┘          │                   │
                        │  no            │                   │
                        ▼                ▼                   │
     ┌──────────────────┐   ┌──────────────────┐             │
     │ Unsuccessful Call │   │ Unsuccessful call │           │
     │ due to            │   │ due to out of     │           │
     │ detached/busy (45)│   │ coverage (44)     │           │
     └──────────────────┘   └──────────────────┘             │
                        │                │                   │
                        │                ▼                   ▼
                        │         ┌────────────────────────────────┐
                        └────────▶│  Update Applicable Record (46)  │
                                  └────────────────────────────────┘
```

Europäisches
Patentamt

European
Patent Office

Office européen
des brevets

# EUROPEAN SEARCH REPORT

Application Number

EP 11 27 5077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/189272 A1 (HUTCHINSON JEFFREY [US] ET AL) 16 August 2007 (2007-08-16)<br>* paragraph [0003] *<br>* paragraph [0010] *<br>* paragraph [0052] - paragraph [0054] *<br>* paragraph [0081] - paragraph [0106] *<br>----- | 1-3,11, 15 | INV.<br>H04W24/08 |
| X | US 7 136 636 B1 (MCLAUGHLIN DANIEL [US]) 14 November 2006 (2006-11-14)<br>* column 3, line 29 - column 4, line 14 *<br>* column 4, line 55 - column 7, line 22 *<br>----- | 1-3,11, 15 | |
| X | US 2004/097237 A1 (AOYAMA AKIO [JP]) 20 May 2004 (2004-05-20)<br>* paragraph [0054] - paragraph [0062] *<br>* paragraph [0074] - paragraph [0089] *<br>----- | 1-3,11, 15 | |
| X | WO 2008/016944 A2 (QUALCOMM INC [US]; BRUNNER CHRISTOPHER [US]; VARGAS BAUTISTA JOSE EDSO) 7 February 2008 (2008-02-07)<br>* paragraph [0019] - paragraph [0026] *<br>----- | 1-3,11, 15 | TECHNICAL FIELDS SEARCHED (IPC)<br><br>H04W |

The present search report has been drawn up for all claims

| Place of search | Date of completion of the search | Examiner |
|---|---|---|
| Berlin | 31 October 2011 | López Pérez, Mariano |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 27 5077

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2011

| Patent document cited in search report | | Publication date | Patent family member(s) | | Publication date |
|---|---|---|---|---|---|
| US 2007189272 | A1 | 16-08-2007 | NONE | | |
| US 7136636 | B1 | 14-11-2006 | NONE | | |
| US 2004097237 | A1 | 20-05-2004 | JP | 4186042 B2 | 26-11-2008 |
| | | | JP | 2004166056 A | 10-06-2004 |
| | | | US | 2011090812 A1 | 21-04-2011 |
| WO 2008016944 | A2 | 07-02-2008 | NONE | | |